# EUROPEAN PATENT APPLICATION

(11) **EP 3 226 483 A1**
(43) Date of publication of application: **04.10.2017**
(21) Application number: 16162988.6
(22) Date of filing: 30.03.2016
(51) Int. Cl.: H04L 12/28, H04L 29/08, H04L 29/06

(54) **REMOTE SERVICE FOR STANDARD TO NATIVE MESSAGES TRANSLATION IN A LAN**

(71) Applicant: Advanced Digital Broadcast S.A., 1292 Chambesy (CH)
(72) Inventor: Storto, Marco, 20126 Milano (IT); Pellegrini, Roberto, 20126 Milano (IT)
(74) Representative: Kancelaria Eupatent.pl Sp. z.o.o

(57) **Abstract**

A method for handling communication in a LAN environment between an endpoint (30) supporting standard messages and an Internet-enabled device (10) supporting device-native messages, the method characterized by communicating the Internet-enabled device (10) with a cloud service (20) configured to translate the standard messages into device-native messages and the device-native messages to the standard messages.

## Description

### TECHNICAL FIELD

This disclosure relates to a system and a method for implementing logical endpoints in Internet-enabled devices (in particular, any physical object or entity equipped with Internet connectivity, such as appliances, sensors or actuators), in particular in order to extend applicability of any protocol that addresses mutual discovery, inter-communication and interoperability among local devices (in particular, Internet of Things (IoT) devices).

### BACKGROUND

There are known various protocols that support mutual discovery, inter-communication and interoperability among devices, such as:
- EEBUS (https://www.eebus.org/en/technological-concept/);
- Bonjour (http://www.apple.com/support/bonjour/);
- AllJoyn (https://allseenalliance.org/framework):
- Weave (https://developers.google.com/weave/):
- HomeKit (https://developer.apple.com/homekit/);
- OIC / UPnP IoTivity (https://www.iotivity.org/).

However, existing implementation solutions for the aforementioned protocols experience various disadvantages and problems. The existing solutions deploy an endpoint protocol stack as embedded inside connectivity electronics of a physical object, device or appliance. This has several drawbacks:
- IoT landscape is fragmented among many different protocols, requiring support of multiple protocols in parallel, in order to ensure interoperability. However, most consumer appliances are very cost-constrained and cannot afford additional hardware and software resources (memory, CPU), required to run multiple protocols in parallel.
- IoT protocols undergo a very fast evolution, while embedded SW development cycles are typically slow (many months).
- Protocol endpoints stacks embedded in the physical devices are more exposed to security problems, as they can be subject to local malicious actions such as tampering, interception, spoofing.
- Securitization and hardening of endpoints localized in the physical devices raises a cost of lifecycle, both directly at the deployment stage and indirectly due to maintenance needs over the lifetime.
- The existing solutions are predicated on a device being connected to a Local Area Network (LAN) for exchange of discovery and interaction messages with other devices, which are also required to be physically connected to the same LAN (i.e. within a common, non-globally routable, address space). This prevents use cases related to the interaction among devices located in different LAN environments.
- Deployment of an updated embedded firmware across a large population of appliance is a major operational burden (even a failure rate of 0,1 % can lead to thousands of failures to manage).
- Protocols promoted by different industry associations are not unified and interoperable, therefore a device that wants to participate to multiple use case ecosystems needs to embed multiple protocol endpoints business logics, exacerbating the issues discussed in the points above.

A European patent application EP2566281 discloses an IoT service architecture and a method for realizing the IoT service. A hierarchical architecture of the described IoT system comprises multiple levels of IoT service platforms. That publication does not address specifically a protocol mediation or proxy function, which is its disadvantage.

A US patent US8717950 discloses a multi-mode endpoint in a communication network system. A gateway connects an endpoint sitting on one side of the gateway to multiple communication servers sitting on the other side, with a logic to query which among the communication servers supports a specific service required by a given endpoint and routing the request to the appropriate server. That publication does not specifically address a protocol mediation or proxy function, which is its major disadvantage.

Therefore, there is a need to provide an improved protocol mediation system and method for implementing logical endpoints in Internet-enabled devices.

### SUMMARY

There is disclosed herein a method for handling communication in a LAN environment between an endpoint supporting standard messages and an Internet-enabled device supporting device-native messages, the method characterized by communicating the Internet-enabled device with a cloud service configured to translate the standard messages into device-native messages and the device-native messages to the standard messages.

Preferably, the method comprises the following steps performed at the Internet-enabled device : receiving from the endpoint the standard message, transmitting the standard message to the cloud service; receiving from the cloud service the device-native message; and processing the device-native message.

Preferably, the method comprises the following steps performed at the Internet-enabled device : generating a device-native message; transmitting the device-native message to the cloud service; receiving from the cloud service the standard message; and sending the standard message to the endpoint.

Preferably, the method comprises communicating the Internet-enabled device with the cloud service via proxies over a tunnel.

Preferably, the method comprises, at the cloud service : translating the standard message to an abstract message and the abstract message to the device-native message; and translating the device-native message to an abstract message and the abstract message to the standard message.

There is also disclosed a computer program comprising program code means for performing all the steps of the method as described above when said program is run on a computer, as well as a computer readable medium storing computer-executable instructions performing all the steps of the method as described above when executed on a computer.

There is also disclosed an Internet-enabled device configured to communicate with an endpoint in a LAN environment, wherein the Internet-enabled device supports device-native messages and the endpoint supports standard messages, characterized in that the Internet-enabled device comprises a connectivity board configured to communicate with a cloud service configured to translate the standard messages into device-native messages and the device-native messages to the standard messages.

Preferably, the connectivity board is configured to: receive from the endpoint the standard message; transmit the standard message to the cloud service; receive from the cloud service the device-native message; and transfer the device-native message to a device main control unit to be processed.

Preferably, the connectivity board is configured to: receive, from a device main control unit the device-native message; transmit the device-native message to the cloud service; receive from the cloud service the standard message; and send the standard message to the endpoint.

There is also disclosed a system for implementing a cloud service for enabling communication between an Internet-enabled device with an endpoint in a LAN environment, wherein the Internet-enabled device supports device-native messages and the endpoint supports standard messages, characterized in that the cloud system is configured to translate the standard messages into device-native messages and the device-native messages to the standard messages.

Preferably, the system comprises a protocol stack configured to translate the standard messages to abstract messages and vice versa; and an M2M parser configured to translate the device-native messages to the abstract messages and vice versa.

There is also described a communication system comprising at least one Internet-enabled device as described above connected via a tunnel with a system for implementing a cloud service as described above.

### BRIEF DESCRIPTION OF THE DRAWINGS

The system and method are presented by means of example embodiments shown in a drawing, in which:
Fig. 1 presents a diagram of a system for implementing logical endpoints in Internet-enabled devices;
Fig. 2 presents a diagram of a method for implementing logical endpoints in Internet-enabled devices;
Fig. 3A, 3B and 3C present respectively flowcharts of implementation of appliance proxy functionality, cloud proxy functionality and virtualized protocol stack functionality;
Fig. 4A presents messaging protocols used in a general case;
Fig. 4B presents an example of a specific embodiment wherein the standard protocol is AllJoyn and the tunneling protocol is MQTT (Message Queuing Telemetry Transport);
Fig. 5A presents a situation wherein without the method as described herein, devices in two different locations cannot interoperate if they are not on the same LAN (e.g. two different households);
Fig. 5B presents a situation wherein using the method as described herein, devices in two different locations can interoperate thanks to the bridging function provided by the cloud service;
Fig. 6 presents a diagram of a cloud system implementing the cloud service.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "for example" introduce a list of one or more non-limiting examples, instances, or illustrations.

### DETAILED DESCRIPTION

The basic concept of the presented method and system is to relocate an endpoint protocol stack to a cloud service, which in turn acts as a virtualized endpoint for a particular device.

According to the presented method and system, software embedded in each device does not need to include a protocol-specific stack and the representation of the state of the device on a standard data model. The embedded software includes just a proxy function between a local network interface and a remote cloud service, which performs termination of protocol stack and translation of a data model on behalf of the device.

In other words, the presented method and system relate to a protocol mediation function between, for example, an IoT device located in a network edge, and an endpoint located in the same network edge, realized by a remote cloud service connected over the Internet. Placing the protocol interpretation and mediation in a remote cloud addresses the issues discussed in the background section, both for devices using the same protocol and for devices using different protocols.

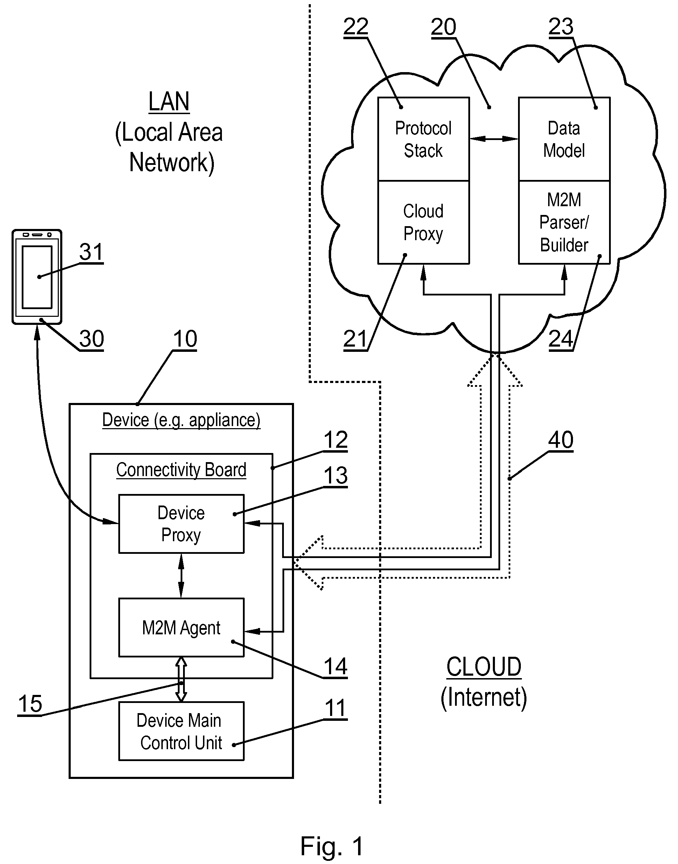

Fig. 1 presents a diagram of the system for implementing logical endpoints in Internet-enabled devices 10. The devices can be for example appliances (such as a washing machine, a microwave, a dishwasher), sensors (such as a movement sensor, a temperature sensor, a window opening sensor, a camera, a microphone) or actuators (such as a motor, a driver, a loudspeaker). The system may be realized by embedding a connectivity board 12 in a device 10 in order to enable Internet connectivity, for example using Wi-Fi technology. The connectivity board 12 communicates with the main control logic 11 of the device 10 (for example, a dedicated micro-controller unit - MCU) via an embedded bus 15, such as RS485, LIN, I2C or similar. Data communication over the bus 15 follows a device-native protocol, typically based on binary frame formats.

The connectivity board 12 establishes a tunnel 40 towards a cloud service handled by a cloud system 20. The tunnel 40 is understood herein as any communication link between two endpoints, across the Internet or an intranet. A device proxy 13 (of the device 10) encapsulates data frames originated from/directed to endpoints 30 present in the Local Area Network (LAN) (for example, AllJoyn protocol messages) and forwards them between the tunnel 40 and the LAN, enabling bidirectional communication of these data frames between the LAN and cloud services 20.

A software agent 14 - a Machine to Machine (M2M) agent - encapsulates device-native messages to/from the main control logic 11 and forwards them between the tunnel 40 and the embedded bus 15 of the device 10, enabling bidirectional communication of these device-native messages between the main control logic 11 and the cloud services 20.

Cloud services 20 provide protocol mediation between standard protocols and data models (e.g. AllJoyn, EEBUS, IOTivity, etc.) and device-native proprietary protocol.

Thus, there are two types of messages: a standard message (type 1), defined in an industry standard that is transported over the LAN interface and transported inside the tunnel 40 between the device and the cloud services 20, as well as a device-native message (type 2), which is a device-native message defined in a proprietary protocol used by the particular device.

The standard messages (type 1), such as commands for the device originating from the endpoints 30 in the LAN are encapsulated with associated metadata (e.g. a timestamp and authentication metadata) inside the tunnel 40 and transferred to the cloud in order to enable message processing in the cloud service 20. The cloud service 20 then translates the standard message into one or more device-native messages, which overall accomplish the function requested by the incoming standard message, and transfers them back to the device.

Device-native messages originated by device Main Control Unit 11, such as device responses to the endpoint, are sent back to the cloud service 20; the cloud service 20 then interprets the device-native messages and generates one or more corresponding standard messages, which are encapsulated inside the tunnel 40 and transferred back to the proxy function embedded in the device 10. The proxy function extracts the standard messages from the tunnel 40 and transmits them to the final endpoint 30 in the LAN.

One specific feature of the presented method and system is that connectivity board 12 applications (the device proxy 13 and the M2M agent 14) do not attempt to analyze the device-native messages: they just forward them to the cloud and vice-versa.

The cloud service 20 comprises a cloud proxy 21, which receives encapsulated protocol frames (for example, AllJoyn protocol messages), extracts them and forwards them to the specific protocol stack 22 (for example, AllJoyn).

The protocol stack 22 translates the standard messages into queries or actions on a virtualized device data model 23, which stores an abstract representation of the state of the device 10. Such virtualized data model 23 provides a unified representation of the state of the device 10, suitable to support all the possible states and functions of the device, augmented with all the data and metadata required by the standard protocols.

The cloud service 20 identifies connected devices using suitable authentication credentials such as X.509 certificates, enabling secure identification of the origin of each received message.

Furthermore, the cloud service 20 keeps a catalog of managed device types, which provides per each device type the translation rules between standard messages, the virtualized device data model 23 and the device-native messages. The cloud service 20 includes also an inventory of the managed devices, which defines the catalog type associated to each individual device.

Changes in the virtualized data model 23 are translated into device-native protocol messages via an M2M parser 24 (which can be also called a builder), which also performs the opposite translation when device-native messages are received from the M2M agent 14.

To illustrate the operation of the system, examples of AllJoyn messages transmitted between an endpoint 30, such as a user's mobile phone, and a device 10, such as a washing machine, will be discussed.

For example, an AllJoyn message corresponding to a command requesting to pause the running cycle in a washing machine 10 is first converted in the equivalent abstract representation in the virtualized data model 23 for an abstract washing machine, then translated (by the builder 24) into the equivalent device-native message (which typically is a binary frame) to be transferred to the main control logic 11 of the particular washing machine.

In the opposite direction, a spontaneous response from a particular washing machine 10 reporting to the user's endpoint 30 that a current cycle is terminated, is first translated (by a parser 24) into its abstract representation in the virtualized data model 23, then converted into the equivalent standard message (such as AllJoyn message) for the supported standards and sent to the user's endpoint 30.

In terms of the architecture of the cloud service 20, the endpoint functionality can be realized as a multi-tenant service, wherein parts of application business logic of the protocol are unified and shared, while endpoint sessions and device-native data structures are instantiated separately and multiplexed into the shared service logic.

In addition, the cloud service may implement a bridging service logic, which allows devices on different LAN environments to discover one another and to exchange protocol messages with one another.

Such bridging service logic comprises the following functions: a directory of protocol specific URIs; and a directory of devices 10 that have registered to the cloud service endpoint.

Additionally, the cloud service 20 may implement a mediation service logic, which allows the devices 10 to participate into multiple protocol ecosystems, by means of a multi-protocol translation function implemented in the cloud service.

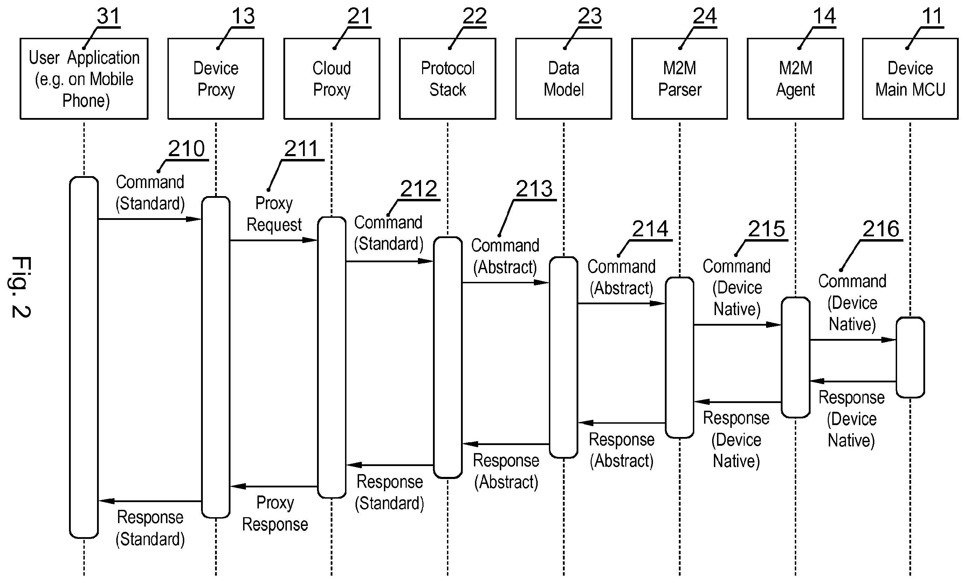

Fig. 2 presents a diagram of a method for implementing logical endpoints in Internet-enabled devices. It illustrates a message flow for a local area network endpoint 30 issuing a command to the device 10 and the device 10 responding to the endpoint 30.

First, a software application 31, executed for example on a mobile phone 30, issues a standard message 210, such as an AllJoyn message, corresponding to a command requesting to pause the running cycle in a washing machine.

The command message 210 is transmitted to the device 10 and in particular processed by the device proxy 13, which encapsulates the data frames, originated from the mobile phone 30, which transports such message and forwards them 211 from the LAN to the cloud service 20.

The device proxy 13 is configured to forward to the cloud service 20 every message received from local area network endpoints 30 for the protocol types supported by the cloud service 20. Configuration of the message types to be forwarded is performed from the cloud service 20 as a remote management action.

The device proxy 13 sends the proxied request 211 to a cloud proxy 21, which receives the encapsulated protocol frames, extracts them and forwards the extracted message 212 (which is equivalent to the original message 210 received from the local area network endpoint 30) to a specific protocol stack 22.

As previously explained, the protocol stack 22 translates the protocol-specific standard messages into queries or actions on the virtualized device data model 23, using the abstract representation 213 used by the virtualized data model. While changes 214 in the virtualized data model 23 are communicated to and translated into device-native messages 215 via the M2M parser/builder 24, which also performs the opposite translation when device-native messages are received from the M2M agent 14.

The device-native message 215 is then transferred to the M2M agent 14, which relies it to the main control logic 11 of the device 10.

After the actions performed by the elements 21-24 at the cloud service 20, the M2M parser/builder 24 returns a message to the M2M agent 14, which encapsulates the device-native messages to/from the main control logic 11. Finally, the main control logic 11 receives a device-native message 216 and processes it.

Similarly, the main control logic 11 may respond to the device-native message by issuing a response message 226 over the same path backwards, wherein messages 220-226 correspond respectively to messages 210-216.

Thus, for example, an IoT device 10 located in a network edge, communicates with an endpoint 30 located in the same network edge, by means of a remote cloud service 20 connected over the Internet.

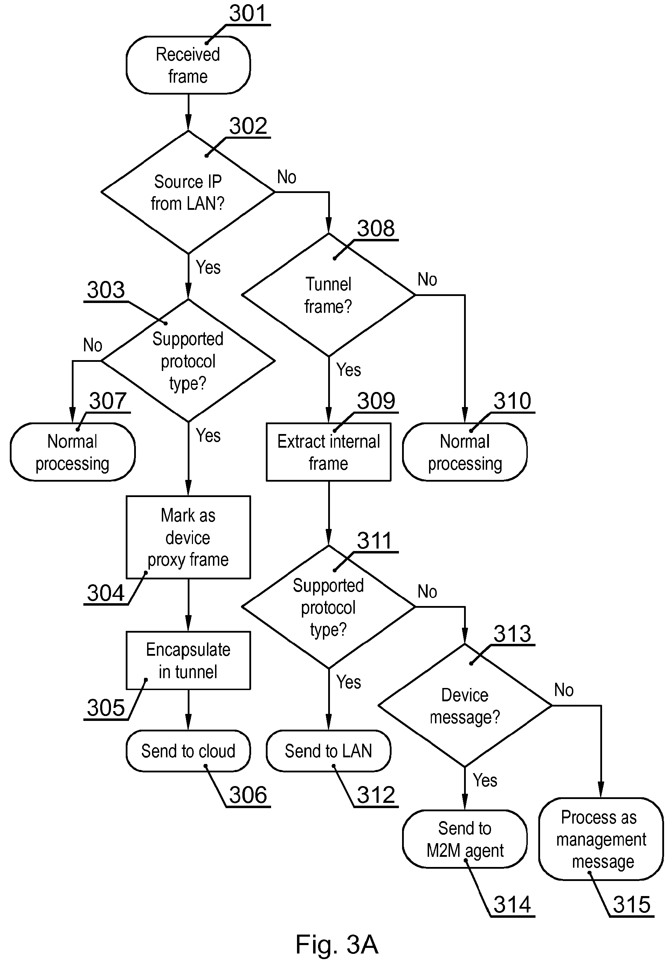

Fig. 3A presents a flowchart of processing a message by the device proxy 13.

Every time a frame is received in step 301 from a LAN interface (e.g. a Wi-Fi interface), the device proxy 13 checks in step 302 if the frame is originated from the LAN and matches the criteria in step 303 configured to identify supported protocols (based on TCP/UDP destination ports or other criteria). If these checks are successful, then the received frame is marked as a device proxy frame in step 304, encapsulated in a tunnel 40 in step 305 and forwarded to the cloud 20 in step 306.

If the frame is not originated from the LAN and it matches the tunnel format in use in step 308, then the internal frame is extracted in step 309 and analyzed in step 311. In all other cases the received frame is processed by the standard TCP/IP stack in steps 307, 310.

If the extracted frame matches the criteria configured to identify supported protocols, then it is forwarded to the LAN in step 312.

If the extracted frame transports a device-native message, then it is transmitted to the M2M agent in step 314, which then delivers it to the device main control unit 11.

Otherwise, the extracted frame is processed as a management message in step 315.

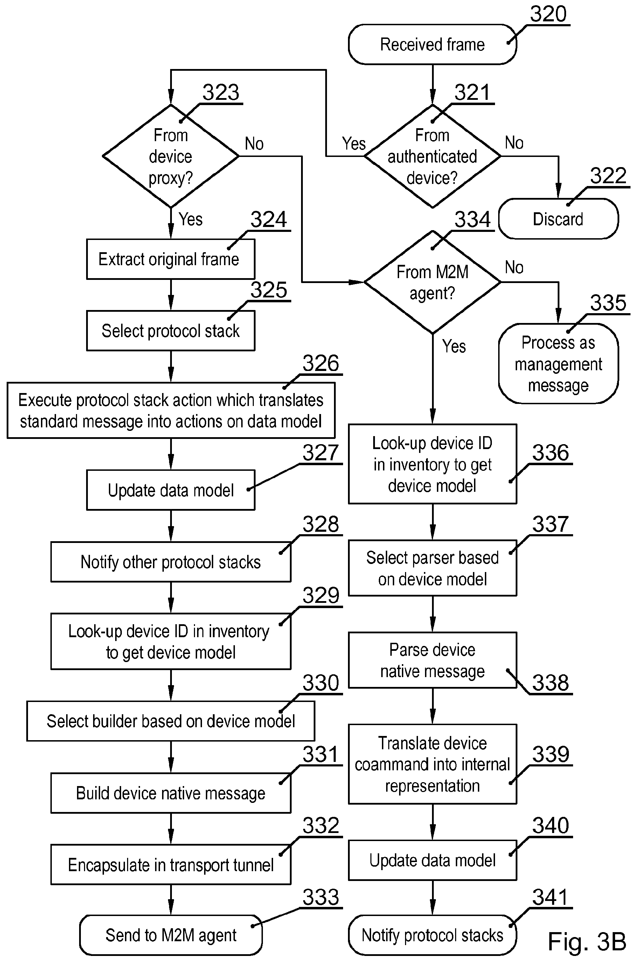

Fig. 3B presents a flowchart of processing a message by the cloud proxy 21.

Every time a frame is received in step 320, the cloud proxy 21 checks in step 321 if the message is originated by an authenticated device 10 (e.g. using a TLS client authentication in case the tunnel protocol is based on a TLS standard) and discards frames from unauthenticated devices in step 322. In case of frames originated from authenticated devices 10, the device ID is extracted from the authentication data, then the frames are subject to different processing, depending on the frame type.

In case of device proxy frames, the internal frame is extracted in step 324 and forwarded to an appropriate protocol stack 22 in step 325. The protocol stack 22 interprets the standard message in step 326 and translates it into the equivalent actions on abstract data model 23.

Updates on data model in step 327 are notified to the other protocol stacks 22 in step 328, and then a device-specific builder 24 is selected in step 330 based on the inventory data. Specifically, a lookup in the inventory database is performed in step 329 based on the device ID to extract the device type, then a lookup in the device catalog to extract the builder ID, which is then used to pick the right builder from the parser/builder library.

Using the selected builder, the data model update is transformed into one or more device-native messages in step 331, which are encapsulated in the tunnel 40 in step 332 and sent to the M2M agent 14 in step 333.

In case of M2M agent frames, a device-specific parser is selected in step 337 based on inventory data. Specifically, a lookup in inventory database is performed in step 336 based on the device ID to extract the device type, then a lookup in the device catalog to extract the parser ID, which is then used to pick the right parser 24 the from parser/builder library.

Using the selected parser 24 in step 337, the M2M agent frame is parsed in step 338 and translated in step 339 into the equivalent actions on the abstract data model, which is updated in step 340, and which are notified to the standard protocol stacks 22 in step 341.

Frames which are not from the M2M agent 14 are processed as a management message in step 335.

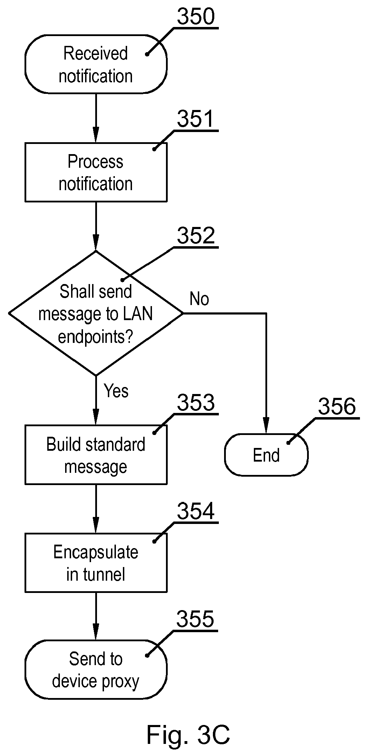

Fig. 3C presents a flowchart of processing of data model update notification by the standard protocol stacks 22. The notification received in step 350 is processed in step 351 to identify in step 352 whether one or more messages shall be sent to LAN endpoints. In case the message(s) shall be sent, the relevant message(s) are built by the protocol stack 22 in step 353, then encapsulated in the tunnel 40 in step 354 and transmitted to the device proxy 13 in step 355

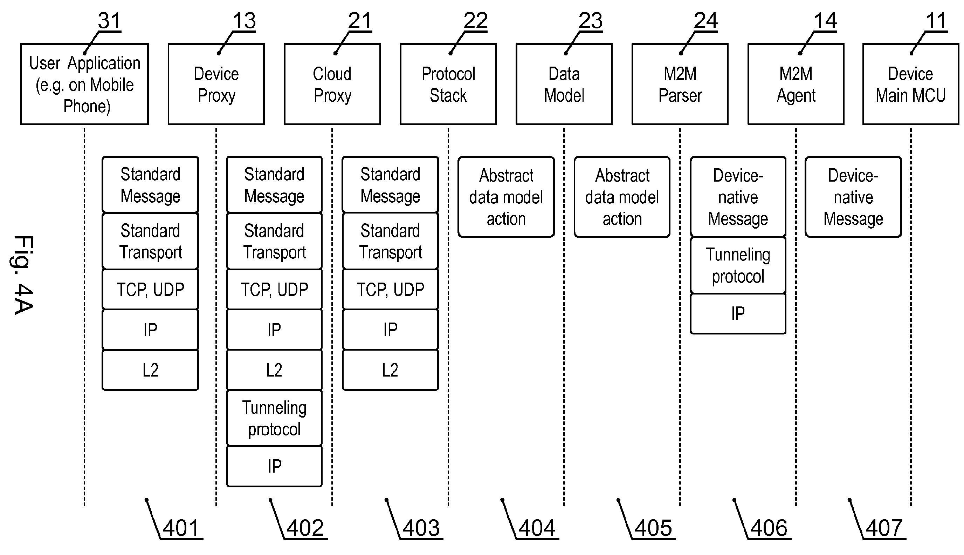

Fig. 4A presents the messaging protocols used in the present invention in the general case. A message 401 entering from the LAN, e.g. from a user application installed on a mobile phone 31, is a standard message transported over a standard-defined transport, which typically uses UDP or TCP over IP as underlying delivery protocol. The device proxy 13 encapsulates the incoming message in the tunnel 40 over IP 402 and transfers it to the cloud proxy 21, which extracts the original message 403 and forwards it to the appropriate standard protocol stack(s) 22. The protocol stack 22 interprets the received message and translates it into the equivalent actions on an abstract data model 404. Data model changes 405 are translated by the M2M parser/builder 24 into equivalent of a device-native message which is encapsulated in the tunnel 40 and sent to the M2M agent 14. The M2M agent 14 processes the received frame 406, extracts the device-native message 407 and sends it to the device main control unit 11. In case of a message originated from device main control unit, the flow is symmetrical.

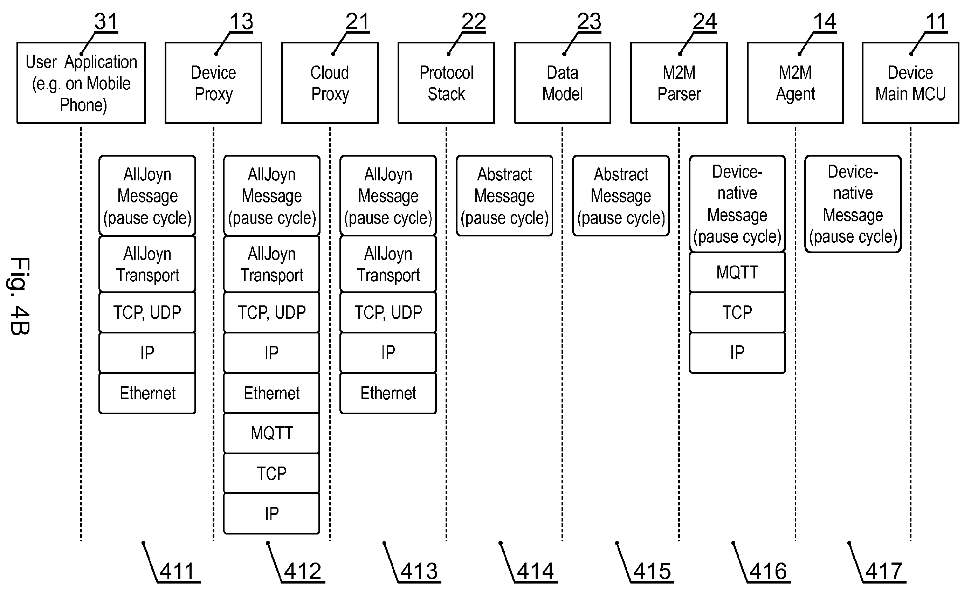

Fig. 4B presents a specific embodiment wherein the standard protocol is AllJoyn and the tunneling protocol is MQTT. This is just one simple example of implementation, as many alternatives exists for the tunneling protocol and many competing standard exists for mutual discovery, inter-communication and interoperability among devices. The proposed solution can be applied with any tunneling protocol and any standard protocol. Elements 411-417 are specific examples of the elements 401-407 of Fig. 4A.

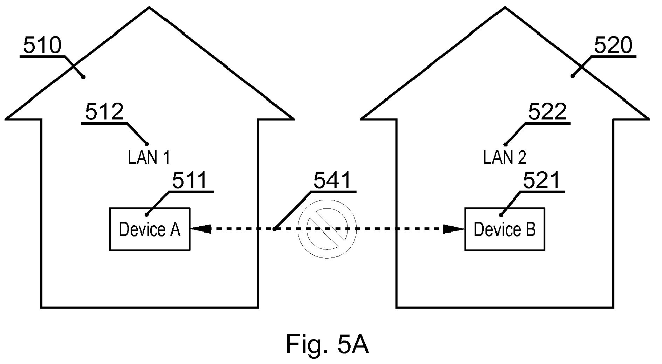

Fig. 5A shows the limitation of existing implementation, where devices 511, 521 in two different locations (e.g. two different households 510, 520) cannot interoperate if they are not on the same LAN 512, 522.

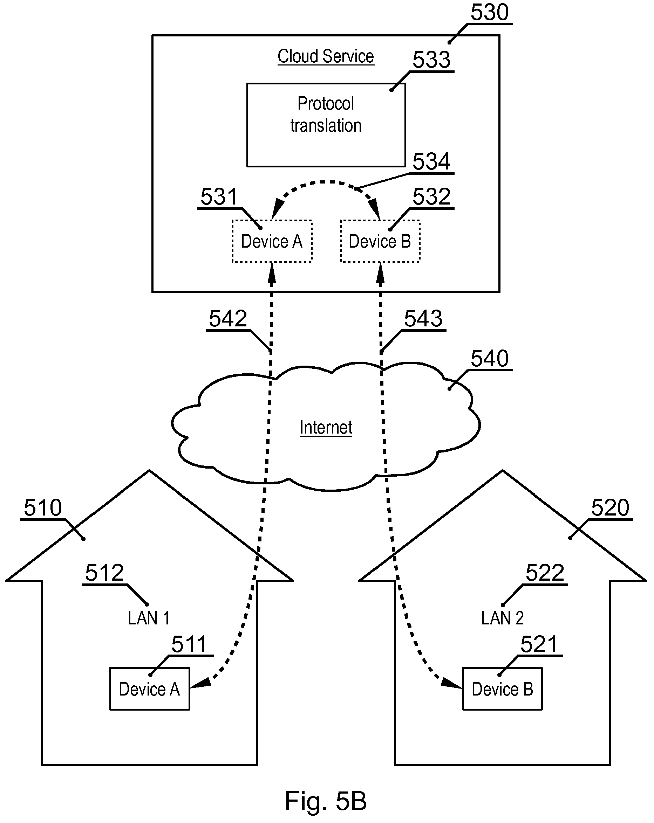

Fig. 5B shows how the proposed method enables devices in two different locations 510, 520 to interoperate thanks to the bridging function provided by the cloud service 530. Messages are transmitted between the device 511 and its cloud service 531 over a tunnel 542, and between the device 522 and its cloud service 532 over a tunnel 543.

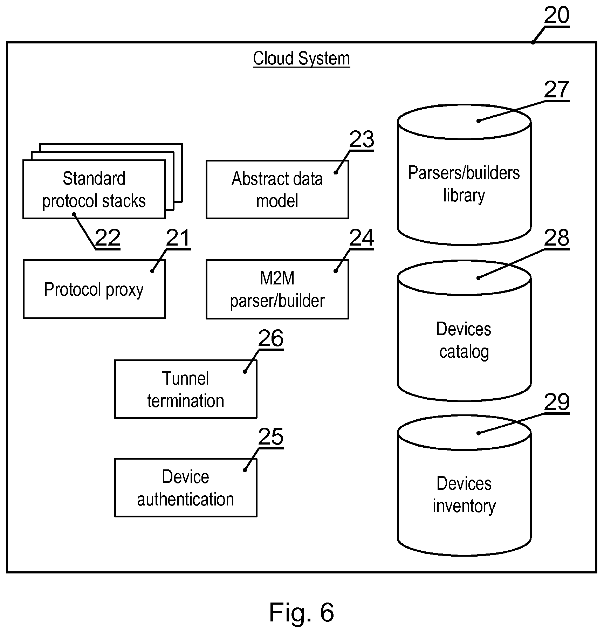

Fig. 6 presents an example of an implementation diagram of the cloud system 20 realizing the cloud service.

A device authentication function 25 ensures that identity of each connected device (device ID) is established in a trusted manner, e.g. using TLS client authentication with X.509 client certificates.

A tunnel termination function 26 forwards frames received from the authenticated devices towards the protocol proxy or the M2M parser/builder and vice versa, based on the type of each received frame (proxied frames vs. device messages).

A protocol proxy 21 extracts the original frame, forwards it to the protocol stacks 22; it also encapsulates frames generated by the protocol stacks 22 and sends them to the tunnel termination.

The protocol stacks 22 translate the received action messages into actions on abstract data model and generate notification messages in response to changes in abstract data model.

The abstract data model 23 stores an abstract representation of device state, acting as a mediation and normalization point among device-native data model and standard data models.

The M2M parser/builder 24 translates the abstract data model changes into the device-specific messages and vice versa, using message parsing and building rules from a parsers/builders library 27.

A devices catalog 28 stores the association between each device type and the parsing and building rules used for that device type.

A devices inventory 29 stores the association between device ID and device type per each registered device.

According to the presented system and method, decreased hardware and software resources are required in a device 10 (for example an IoT device), lowering the device production and test costs.

Additionally, the presented method and system allow lower maintenance costs over the device lifetime, which is achieved due to: updates to the endpoint logic do not require functionality interruption of the device main software, avoiding downtime; and updates to the endpoint logic may be limited to the shared service component, making the update process faster and immune from issues related to remote software upgrade.

Furthermore, there is provided a higher and comprehensive security enforcement across all devices connected, as endpoint service securitization can benefit from more sophisticated, state-of-the-art and resource intensive techniques applicable to cloud infrastructure servers.

The presented method and system also help to ensure interaction among devices, which are located in different LAN environments, or while moving from one LAN environment into another, thanks to the optional bridging functionality realized in the cloud service.

Therefore, interoperability can be facilitated among devices across multiple protocol ecosystems, without requiring resource constrained devices to embed multiple protocol support and compliance.

Thus, the presented system and method provide a useful, concrete and tangible result.

The aforementioned system and method are applicable in computer networks wherein devices, such as IoT devices, communicate with each other and/or a remote system. Specific data processing and encapsulation is required during the process, therefore the machine or transformation test is fulfilled and that the idea is not abstract.

At least parts of the methods as described herein may be computer implemented. Accordingly, the presented system and method may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the presented system and method may take the form of a computer program product embodied in any tangible medium of expression having computer usable program code embodied in the medium.

It can be easily recognized, by one skilled in the art, that the aforementioned method for implementing logical endpoints in Internet-enabled devices may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the system and method presented herein have been depicted, described, and has been defined with reference to particular preferred embodiments, such references and examples of implementation in the foregoing specification do not imply any limitation. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for handling communication in a LAN environment between an endpoint (30) supporting standard messages and an Internet-enabled device (10) supporting device-native messages, the method **characterized by** communicating the Internet-enabled device (10) with a cloud service (20) configured to translate the standard messages into device-native messages and the device-native messages to the standard messages.

2. The method according to claim 1, comprising the following steps performed at the Internet-enabled device (10):
- receiving from the endpoint (30) the standard message (210),
- transmitting the standard message (210) to the cloud service (20);
- receiving from the cloud service (20) the device-native message (216); and
- processing the device-native message (216).

3. The method according to claim 1 or 2, comprising the following steps performed at the Internet-enabled device (10):
- generating a device-native message (226);
- transmitting the device-native message (226) to the cloud service (20);
- receiving from the cloud service (20) the standard message (221); and
- sending the standard message (221) to the endpoint (30).

4. The method according to any of previous claims, comprising communicating the Internet-enabled device (10) with the cloud service (20) via proxies (13, 21) over a tunnel (40).

5. The method according to any of previous claims, further comprising, at the cloud service (20):
- translating the standard message (212) to an abstract message (213) and the abstract message (213) to the device-native message (215); and
- translating the device-native message (225) to an abstract message (223) and the abstract message (223) to the standard message (222).

6. A computer program comprising program code means for performing all the steps of the method according to any of claims 1-5 when said program is run on a computer.

7. A computer readable medium storing computer-executable instructions performing all the steps of the method according to any of claims 1-5 when executed on a computer.

8. An Internet-enabled device (10) configured to communicate with an endpoint (30) in a LAN environment, wherein the Internet-enabled device (10) supports device-native messages and the endpoint (30) supports standard messages, **characterized in that** the Internet-enabled device (10) comprises a connectivity board (12) configured to communicate with a cloud service (20) configured to translate the standard messages into device-native messages and the device-native messages to the standard messages.

9. The Internet-enabled device (10) according to claim 8, **characterized in that** the connectivity board (12) is configured to:
- receive from the endpoint (30) the standard message (210);
- transmit the standard message (210) to the cloud service (20);
- receive from the cloud service (20) the device-native message (216); and
- transfer the device-native message (216) to a device main control unit (11) to be processed.

10. The Internet-enabled device (10) according to claim 8, **characterized in that** the connectivity board (12) is configured to:
- receive, from a device main control unit (11) the device-native message (226);
- transmit the device-native message (226) to the cloud service (20);
- receive from the cloud service (20) the standard message (221); and
- send the standard message (221) to the endpoint (30).

11. A system (20) for implementing a cloud service for enabling communication between an Internet-enabled device (10) with an endpoint (30) in a LAN environment, wherein the Internet-enabled device (10) supports device-native messages and the endpoint (30) supports standard messages, **characterized in that** the cloud system (20) is configured to translate the standard messages into device-native messages and the device-native messages to the standard messages.

12. The system (20) according to claim 11, comprising:
- a protocol stack (22) configured to translate the standard messages (212, 222) to abstract messages (213, 223) and vice versa; and
- an M2M parser (24) configured to translate the device-native messages (215, 225) to the abstract messages (213, 223) and vice versa.

13. A communication system comprising at least one Internet-enabled device (20) according to any of claims 8-10 connected via a tunnel (40) with a system (20) for implementing a cloud service according to any of claims 11-12.
